Europäisches Patentamt

European Patent Office

Office européen des brevets

(19)

(11) Veröffentlichungsnummer: **0 159 596**
**A1**

(12) # EUROPÄISCHE PATENTANMELDUNG

(21) Anmeldenummer: **85104081.6**

(51) Int. Cl.⁴: **C 21 B 5/00, C 01 B 31/18**

(22) Anmeldetag: **03.04.85**

(30) Priorität: **07.04.84 DE 3413274**
         **26.03.85 DE 3510904**

(43) Veröffentlichungstag der Anmeldung: **30.10.85**
     **Patentblatt 85/44**

(84) Benannte Vertragsstaaten: **BE FR GB IT NL**

(71) Anmelder: **Bergwerksverband GmbH,**
     **Franz-Fischer-Weg 61, D-4300 Essen 13 (DE)**

(72) Erfinder: **Rohde, Wolfgang, Dr. Dipl.-Ing.,**
     **Echstenkämperweg 5, D-4300 Essen 14 (DE)**
     Erfinder: **Habermehl, Diethard, Dr. rer. nat. Dipl.-Phys., In**
     **der Lake 45, D-4300 Essen 14 (DE)**
     Erfinder: **Wünnenberg, Wolfgang, Dipl.-Ing.,**
     **Ulmenstrasse 12, D-4300 Essen 1 (DE)**
     Erfinder: **Kurcharzyk, Werner, Birkenweg 35,**
     **D-4477 Twist (DE)**

(54) **Verfahren zum Betrieb eines Hochofens.**

(57) Verfahren zum Betrieb eines Hochofens, wobei Koksofengas über Hochofendruck komprimiert und als zusätzliches Reduktionsgas verwendet wird, indem das ungereinigte Koksofengas mit Sauerstoff partiell in einem Schwingrohrreaktor oxidiert, die Verbrennungsprodukte $CO_2$ und $H_2O$ unmittelbar anschließend in glühendem Koks gespalten und das so umgesetzte Koksofengas in den Hochofen eingeführt wird.

EP 0 159 596 A1

0159596

Die Erfindung betrifft ein Verfahren zum Betrieb eines Hochofens, wobei Koksofengas als zusätzliches Reduktionsgas verwendet wird.

Im Hochofen hat der Koks die Aufgabe, als

- Stützgerüst
- Reduktionsmittel
- Energieträger und als
- Aufkohlungsmittel

zu dienen.

Die Funktion als Reduktionsmittel nimmt der Koks unmittelbar
nach Verbrennung zu Kohlenmonoxid wahr.

In der Vergangenheit hat sich der Betrieb des Hochofens insbesondere mit dem Ersatzbrennstoff Schweröl sowohl verfahrenstechnisch als auch wirtschaftlich bewährt. Hierbei wird
ein Teil der Koksbeschickung durch Schweröl ersetzt, das in
die Blasformen eingespritzt wird. Es liefert Wärmeenergie und
es kühlt gleichzeitig die Flamme vor den Blasformen. Aufgrund
des Preisanstiegs bei Rohöl ist diese Technologie mehr und
mehr aufgegeben worden.

Als weiterer Ersatzbrennstoff hat in jüngster Zeit Kohlenstaub Eingang in die Hochofenpraxis gefunden. Auch dieser
Ersatzbrennstoff wird im Bereich der Blasformen in den Hochofen eingeblasen. Die Technik ist etwas schwieriger zu beherrschen als das Einblasen von Schweröl, weil der Kohlenstaub förder- und regelungstechnisch Probleme aufwirft.

- 4 -

2

Generell sind natürlich auch weitere Ersatzbrennstoffe denkbar, wie z.B. Wasserstoff und Kohlenmonoxid. Da beispielsweise auch Koksofengas einen hohen Wasserstoffanteil aufweist, ist in früherer Zeit versucht worden, dieses Gas in
den Hochofen einzublasen. Es ist aber auch vorgeschlagen
worden, das Koksofengas erst zu modifizieren, d.h., das
Methan durch partielle Oxidation zu spalten, um aus dem Koksofengas ein Gas mit höherem Reduktionspotential zu erzeugen.
Erfahrungsgemäß steigt dabei aber der $H_2O$- und $CO_2$-Anteil in
unzulässiger Weise an.

Problematisch ist die Verwendung von Ersatzbrennstoffen in
Hochöfen entweder aufgrund der Rohstoffpreise (Schweröl),
aufgrund der schwer beherrschbaren Verfahrenstechnik der
Staubeinblasung (Feststofftransport und -regelung) oder aufgrund der Zusammensetzung des Reduktionsgases (hohe $H_2O$-
und $CO_2$-Gehalte).

Der Erfindung liegt die Aufgabe zugrunde, die vorgenannten
Nachteile der bekannten Ersatzbrennstoffe zu vermeiden und
ein Verfahren zum Betrieb eines Hochofens, wobei Koksofengas als zusätzliches Reduktionsgas verwendet wird, vorzuschlagen, das durch die in Anspruch 1 aufgeführten Verfahrensschritte gekennzeichnet ist.

Ansprüche 2 bis 8 stellen zweckmäßige Weiterbildungen dar.

Nach der erfindungsgemäßen Lösung läßt sich für den Hochofen ein Ersatzbrennstoff erzeugen, der aufgrund des hohen
Reduktionspotentials gleichzeitig zur Reduktion des Wüstits
zu elementarem Eisen genutzt werden kann.

- 5 -

3

Das vorgeschlagene Verfahren wird nachfolgend anhand zweier
Beispiele, die durch die beigefügten Übersichtsdarstellungen
erläutert werden, beschrieben. Wie aus den Darstellungen hervorgeht, dient als Ausganggsrohstoff ungereinigtes Kokereigas,
wie es nach den Vorkühlern 1 bzw. nach dem Gassauger 2 ansteht.

Im 1. Beispiel wird eine Rohgasmenge von rund 20.400 m$^3$/h mit
etwa 80$^o$C dem Vorkühler 1 aufgegeben. Parallel und teilweise
nachgeschaltet ist der Teerscheider 3 für den Rohteer.

Aus dem Vorkühler 1 wird das Rohgas, das noch 25$^o$C aufweist,
mit dem Gassauger 2 abgesaugt, wobei es sich auf eine Temperatur von 35$^o$C erwärmt. Ein nachgeschalteter Verdichter 4
bringt das Gas auf einen Druck von 4 bis 5 bar. Das verdichtete Gas wird dann einem Schwingrohrreaktor 5, wie er beispielsweise in der DE-OS 31 15 391 beschrieben ist, aufgegeben. Dort
wird es unter Zugabe von Sauerstoff, im Beispiel 9.600 m$^3$/h,
zu einem Reduktionsgas SGI (Schwingrohrgas I) umgesetzt, von dem
im Beispiel 1 rund 42.230 m$^3$/h erzeugt werden. Die Volumenzunahme beträgt dabei das 2,07-fache des Ausgangsgases.

Das Schwingrohrgas I hat folgende Zusammensetzung:

| | | |
|---|---|---|
| $CO_2$ | 7,5 | % |
| CO | 17,6 | % |
| $H_2$ | 40,6 | % |
| $CH_4$ | 0,7 | % |
| $N_2$ | 1,3 | % |
| $H_2O$ | 32,3 | % |

Verfahrensbedingt hat das Schwingrohrgas I noch relativ hohe
Anteile an $H_2O$ und $CO_2$. Dieser Nachteil wird in einer zweiten Behandlungsstufe behoben. Das nach der Reaktion mit

- 6 -

4

Sauerstoff hocherhitzte Schwingrohrgas I wird einer Wirbelschicht 6 aus Feinkoks zugeführt, die im Schwingrohrreaktor 5
angeordnet ist. Im Beispiel 1 wird sie mit einer Feinkoksmenge
von 5 t/h beschickt. In dieser Wirbelschicht 6 erfolgt eine
Spaltung der Ballaststoffe $H_2O$ und $CO_2$ zu $H_2$ und CO.

Im Beispiel 1 ergibt sich folgende Zusammensetzung des Schwingrohrgases II, das gleichzeitig eine Volumenzunahme um das 2,45-
fache erfährt. Es setzt sich zusammen aus

| | | |
|---|---|---|
| $CO_2$ | 4,1 | % |
| CO | 32,8 | % |
| $H_2$ | 47,8 | % |
| $CH_4$ | 0,6 | % |
| $N_2$ | 1,1 | % |
| $H_2O$ | 13,6 | % |

Der Umsatz im Wirbelbett beträgt im Beispiel 1 bei $H_2O$ etwa 50 %
und bei $CO_2$ etwa 35 %. Der Oxidationsgrad wird dabei von 40,6
auf 18 % gesenkt.

Nach der endothermen Reaktion verfügt das Schwingrohrgas II
noch immer über ein sehr hohes Temperaturniveau. Vorteilhafterweise wird es möglichst unter Vermeidung von Wärmeverlusten
direkt in den Hochofen 7 eingeblasen. Im Beispiel 1 beträgt die
Temperatur des Schwingrohrgases II rund 1000$^O$C. Die Menge des
Schwingrohrgases II liegt bei rund 50.000 m$^3$/h.

Der besondere technische Vorteil des Verfahrens besteht darin, daß ungereinigtes Koksofengas in kaltem Zustand verdichtet, mit Sauerstoff partiell und schwingend oxidiert,
unter Ausnutzung der Verbrennungsenergie an feinkörnigem Koks umgesetzt und dann unter Beibehaltung des hohen Temperaturniveaus in den Hochofen 7 eingeblasen wird, wo aufgrund des hohen Reduktionspotentials der Wüstit zu Fe reduziert wird. Dadurch werden durch das Austauschverhältnis von 0,2 kg Koks je $m^3$ (i.N.) Schwingrohrgas 10 t/h Koks eingespart, die wirtschaftlich höher bewertet werden als das erzeugte Schwingrohrgas.

Der Betrieb des Hochofens 7 nach dem vorbeschriebenen Beispiel 1 gestaltet sich wie folgt: Die Beschickung erfolgt mit 90 t/h Koks. Durch Zugabe der vorbeschriebenen 50.000 $m^3$/h Schwingrohrgas II genügt eine Luftzugabe von 216.000 $m^3$/h, das sind 24.000 $m^3$/h Luft weniger, die für die Erzeugung von 200 t/h Roheisen benötigt werden.

Bei einem herkömmlich betriebenen Hochofen 7 werden 100 t/h Koks und 240.000 $m^3$/h Luft eingetragen, um eine Roheisenerzeugung von 200 t/h zu erzielen.

Im 2. Beispiel wird eine Weiterbildung des im 1. Beispiel dargestellten Verfahrens beschrieben. Dabei wird eine Rohgasmenge von rund 23.800 $m^3$/h mit etwa 80$^o$C dem Vorkühler 1 aufgegeben. Parallel und teilweise nachgeschaltet ist der Teerscheider 3 für den Rohteer.

Aus dem Vorkühler 1 wird das Rohgas, das noch 25$^o$C aufweist, mit dem Gassauger 2 abgesaugt, wobei es sich auf eine Temperatur von 35$^o$C erwärmt. Das Gas wird dann unmittelbar und ohne vorherige Verdichtung, wie dies im Beispiel 1 der Fall war, dann einem Schwingrohrreaktor 5, wie er beispielsweise in der DE-OS 31 15 391 beschrieben ist, aufgegeben. Dort wird es unter Zugabe von Sauerstoff, im Beispiel 2 11.000 $m^3$/h, zu einem Schwingrohrgas I (SG1) umgesezt, von dem rund 49.260 $m^3$/h erzeugt werden. Die Volumenzunahme beträgt das 2,07-fache des Ausgangsgases.

- 8 -

6

Das Schwingrohrgas I hat folgende Zusammensetzung:

| | | |
|---|---|---|
| $CO_2$ | 7,5 | % |
| CO | 17,6 | % |
| $H_2$ | 40,6 | % |
| $CH_4$ | 0,7 | % |
| $N_2$ | 1,3 | % |
| $H_2O$ | 32,3 | % |

Verfahrensbedingt hat das Schwingrohrgas I noch relativ hohe Anteile an $H_2O$ und $CO_2$. Dieser Nachteil wird in einer zweiten Behandlungsstufe behoben. Das nach der Reaktion mit Sauerstoff hocherhitzte Schwingrohrgas I wird einer Wirbelschicht 6 aus Feinkoks zugeführt, die im Schwingrohrreaktor 5 angeordnet ist. Im Beispiel 2 wird sie mit einer Feinkoksmenge von 5,9 t/h beschickt. In dieser Wirbelschicht 6 erfolgt eine Spaltung der Ballaststoffe $H_2O$ und $CO_2$ zu $H_2$ und CO. Im Beispiel 2 erfährt das Schwingrohrgas II eine Volumenzunahme um das 2,45-fache.

Das Schwingrohrgas II hat folgende Zusammensetzung:

| | | |
|---|---|---|
| $CO_2$ | 4,1 | % |
| CO | 32,8 | % |
| $H_2$ | 47,8 | % |
| $CH_4$ | 0,6 | % |
| $N_2$ | 1,1 | % |
| $H_2O$ | 13,6 | % |

Der Umsatz im Wirbelbett beträgt auch im Beispiel 2 bei $H_2O$ etwa 50 % und bei $CO_2$ etwa 35 %.

7

Um eine weitere Qualitätssteigerung des Schwingrohrgases II
zu erreichen, wird das SG II in einem Gegenstrom Wärmetauscher 8
auf etwa 130°C abgekühlt. Anschließend gelangt es in einen Waschkühler 9, wo es weiter auf 25°C abgekühlt wird und zugleich das
$CO_2$ ausgewaschen wird. Das anschließend in einem Verdichter 4
auf Hochofendruck komprimierte Gas wird dann im Gegenstromkühler 8 wieder erhitzt.

Die Menge des Schwingrohrgases III (SG III) liegt im Beispiel 2
bei rund 50.000 m$^3$/h. Dies entspricht einer Volumenzunahme um
das 2,06-fache des eingesetzten Rohgases.

Das Schwingrohrgas III hat folgende Zusammensetzung:

| | |
|---|---|
| $CO_2$ | 0,4 % |
| CO | 39,2 % |
| $H_2$ | 57,2 % |
| $CH_4$ | 0,7 % |
| $N_2$ | 1,3 % |
| $H_2O$ | 1,2 % |

Das im wesentlichen $CO_2$- und $H_2O$-freie Gas zeichnet sich gegenüber dem Schwingrohrgas II durch einen noch niedrigeren Oxidationsgrad von 1,6 % aus, hat aber verfahrensbedingt nicht die
geforderte hohe Einblastemperatur.

Das endgültige Temperaturniveau von ca. 1000°C wird durch eine
Nacherhitzerstufe 10 erreicht.

Der besondere technische Vorteil des Verfahrens besteht darin,
daß ungereinigtes Koksofengas mit Sauerstoff partiell und
schwingend oxidiert, unter Ausnutzung der Verbrennungsenergie
an feinkörnigem Koks umgesetzt, anschließend in einem Wasch-

- 10 -

§

kühler qualitätsmäßig weiter verbessert und dann unter weitgehender Ausnutzung des ursprünglichen Wärmeinhalts auf Hochofendruck- und -temperatur gebracht und in den Hochofen 7 eingeblasen wird, wo aufgrund des hohen Reduktionspotentials der Wüstit zu Fe reduziert wird. Dabei werden durch das höhere Austauschverhältnis von 0,3 kg Koks je $m^3$ (i.N.) Schwingrohrgas 15 t/h Koks eingespart.

Der Betrieb des Hochofens 7 nach dem vorbeschriebenen Beispiel gestaltet sich wie folgt: Die Beschickung erfolgt mit 85 t/h Koks. Durch Zugabe der vorbeschriebenen 50.000 $m^3$/h Schwingrohrgas III genügt eine Luftzugabe von 204.000 $m^3$/h, entsprechend einer Einsparung von 36.000 $m^3$/h Luft.

Bei einem herkömmlich betriebenen Hochofen 7 werden 100 t/h Koks und 240.000 $m^3$/h Luft eingetragen, um eine Roheisenerzeugung von 200 t/h zu erzielen.

# BERGWERKSVERBAND GMBH

### VERSUCHSBETRIEBE DER BERGBAU-FORSCHUNG

**4300 Essen 13 (Kray)**
Franz-Fischer-Weg 61
Telefon (0201) 105-1

A 8/131/85 Stl/Ob

Verfahren zum Betrieb eines Hochofens

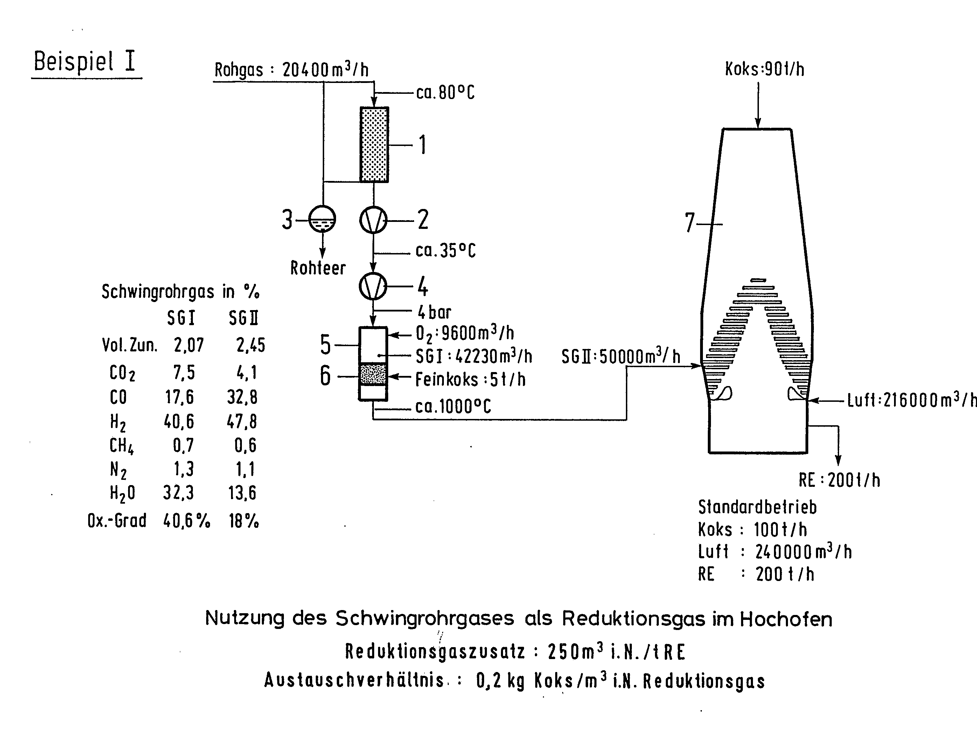

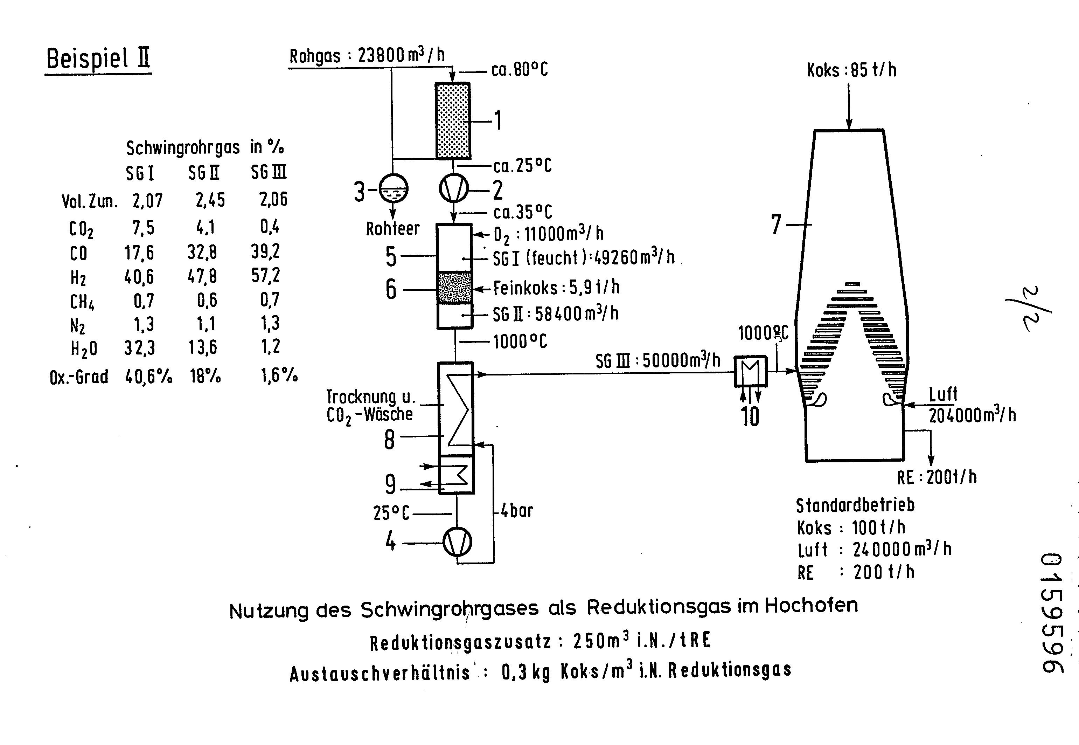

Patentansprüche

1. Verfahren zum Betrieb eines Hochofens, wobei Koksofengas über Hochofendruck komprimiert und als zusätzliches Reduktionsgas verwendet wird, dadurch gekennzeichnet, daß

    a) das ungereinigte Koksofengas mit Sauerstoff partiell in einem Schwingrohrreaktor oxidiert,

    b) die Verbrennungsprodukte $CO_2$ und $H_2O$ unmittelbar anschließend an glühendem Koks gespalten und

    c) das so umgesetzte Koksofengas in den Hochofen eingeführt wird.

2. Verfahren nach Anspruch 1, dadurch gekennzeichnet, daß die Spaltung der Verbrennungsprodukte $CO_2$ und $H_2O$ an glühendem Koks in einer Wirbelschicht vorgenommen wird.

3. Verfahren nach Anspruch 1 und 2, dadurch gekennzeichnet, daß das Koksofengas vor dem Schwingrohr verdichtet und die $CO_2/H_2O$-Spaltung in einer druckbetriebenen Wirbelschicht vorgenommen wird.

- 2 -

4.  Verfahren nach Anspruch 1 und 2, dadurch gekennzeichnet, daß die Umsetzung im Schwingrohr sowie die $CO_2/H_2O$-Spaltung drucklos und die Verdichtung des Reduktionsgases im Anschluß erfolgt.

5.  Verfahren nach Anspruch 1 und 2 sowie 3 oder 4, dadurch gekennzeichnet, daß das Reduktionsgas durch Abkühlung getrocknet und/oder einer $CO_2$-Wäsche unterzogen wird.

6.  Verfahren nach Anspruch 5, dadurch gekennzeichnet, daß das abgekühlte Reduktionsgas wieder erhitzt wird.

7.  Verfahren nach Anspruch 5 und 6, dadurch gekennzeichnet, daß das Reduktionsgas im Gegenstrom gekühlt und wieder erhitzt wird.

8.  Verfahren nach Anspruch 7, dadurch gekennzeichnet, daß das Reduktionsgas auf ca. $1000^{\circ}C$ nacherhitzt wird.

# Beispiel I

Rohgas : 20400 m³/h
ca.80°C
1

Koks : 90 t/h

3 — Rohteer
2
ca.35°C
4
4 bar

**Schwingrohrgas in %**

|          | SGI   | SGII  |
|----------|-------|-------|
| Vol.Zun. | 2,07  | 2,45  |
| $CO_2$   | 7,5   | 4,1   |
| CO       | 17,6  | 32,8  |
| $H_2$    | 40,6  | 47,8  |
| $CH_4$   | 0,7   | 0,6   |
| $N_2$    | 1,3   | 1,1   |
| $H_2O$   | 32,3  | 13,6  |
| Ox.-Grad | 40,6% | 18%   |

5 — $O_2$ : 9600 m³/h
SGI : 42230 m³/h
6 — Feinkoks : 5 t/h
ca.1000°C

SGII : 50000 m³/h

7

Luft : 216000 m³/h

RE : 200 t/h

Standardbetrieb
Koks : 100 t/h
Luft : 240000 m³/h
RE : 200 t/h

## Nutzung des Schwingrohrgases als Reduktionsgas im Hochofen

Reduktionsgaszusatz : 250 m³ i.N./t RE

Austauschverhältnis : 0,2 kg Koks/m³ i.N. Reduktionsgas

1/2

0159596

# Beispiel II

**Schwingrohrgas in %**

| | SG I | SG II | SG III |
|---|---|---|---|
| Vol. Zun. | 2,07 | 2,45 | 2,06 |
| $CO_2$ | 7,5 | 4,1 | 0,4 |
| CO | 17,6 | 32,8 | 39,2 |
| $H_2$ | 40,6 | 47,8 | 57,2 |
| $CH_4$ | 0,7 | 0,6 | 0,7 |
| $N_2$ | 1,3 | 1,1 | 1,3 |
| $H_2O$ | 32,3 | 13,6 | 1,2 |
| Ox.-Grad | 40,6% | 18% | 1,6% |

Rohgas : 23800 m³/ h

ca. 80°C

1

ca. 25°C

3 — 2

Rohteer

ca. 35°C

$O_2$ : 11000 m³/ h

5 — SG I (feucht) : 49260 m³/ h

6 — Feinkoks : 5,9 t/h

SG II : 58400 m³/ h

1000°C

SG III : 50000 m³/h

Trocknung u. $CO_2$-Wäsche

8

9

25°C — 4 bar

4

10 — 1000°C

Koks : 85 t/h

7

Luft 204000 m³/ h

RE : 200 t/h

**Standardbetrieb**
Koks : 100 t/h
Luft : 240000 m³/ h
RE : 200 t/h

Nutzung des Schwingrohrgases als Reduktionsgas im Hochofen

Reduktionsgaszusatz : 250 m³ i.N./tRE

Austauschverhältnis : 0,3 kg Koks/m³ i.N. Reduktionsgas

0159596

0159596

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 362 789 (DIDIER ENGINEERING) * Anspruch 1 * | 1 | C 21 B 5/00 C 01 B 31/18 |
| A | * Ansprüche 2-12 * | 3-8 | |
| | --- | | |
| Y | DE-C- 466 359 (AKTIESELSKAPET NORSK STAAL) * Anspruch 1 * | 1 | |
| | --- | | |
| A | BE-A- 472 906 (GEORGES MIROLUBOFF) * Ansprüche 1-6 * | 1 | |
| | --- | | RECHERCHIERTE SACHGEBIETE (Int. Cl.4) |
| A | GB-A- 855 247 (SHAWINIGAN CHEMICALS) * Anspruch 1; Figur 1 * | 2 | C 21 B C 01 B |
| | ----- | | |

Der vorliegende Recherchenbericht wurde für alle Patentansprüche erstellt.

| Recherchenort DEN HAAG | Abschlußdatum der Recherche 24-06-1985 | Prüfer ELSEN D.B.A. |
|---|---|---|